# EUROPEAN PATENT APPLICATION

(11) **EP 4 176 727 A1**
(43) Date of publication of application: **10.05.2023**
(21) Application number: 21833597.4
(22) Date of filing: 01.07.2021
(51) Int. Cl.: A23F 3/18, A23F 3/16

(54) **EXTRACT LIQUID, PRODUCTION METHOD THEREFOR, AND CONTAINER-PACKAGED BEVERAGE CONTAINING SAME**

(30) Priority: 01.07.2020 CN 202010627108
(71) Applicant: The Coca-Cola Company, Atlanta, GA 30313 (US)
(72) Inventor: GENG, Libo, Atlanta Georgia 30313 (US); SHENG, Oliver, Atlanta Georgia 30313 (US); GUO, Elsie, Atlanta Georgia 30313 (US); SONG, Amy, Atlanta Georgia 30313 (US); WANG, David, Atlanta Georgia 30313 (US)
(74) Representative: Dehns
(86) International application number: PCT/CN2021/104108
(87) International publication number: WO 2022/002219

(57) **Abstract**

An extract liquid production method, comprising : using deionized water to extracting a material to be extracted with deionized water, and discharging an extract solution after extraction is completed to obtain extract residues; adding deionized water to the extract residues to perform extraction, and discharging the extract solution after extraction is completed; optionally, repeating step two; and mixing the extract solutions obtained in the previous steps together to obtain an extract liquid. The present application also relates to an extract liquid obtained by the method, and a container-packed beverage obtained directly from or by diluting the extract liquid. In the present method, multiple extractions are carried out, thereby effectively increasing the extraction yield, reducing product cost, shortening the extraction time, and improving production efficiency, and also effectively inhibiting the dissolution of bitter substances, thus improving the flavor of the beverage.

## Description

### Technical Field

The present application relates to but not limited to beverage production technology, especially an extract liquid, a production method therefor and a container-packaged beverage containing same.

### Background Art

Traditional tea leaf extraction or brewing is usually done with warm or boiled water in order to increase the extraction yield. Since high-temperature extraction results in the dissolution of more bitter substances such as tea polyphenol and caffeine and high-content caffeine has adverse side effects on the human body, such as insomnia, in recent years, being affected by the cold brewing process for coffee beverages, more and more of consumers accept coffee and tea beverages made by the cold brewing process. However, the traditional tea leaf extraction process is used for extraction at a low temperature. Due to the low extraction yield, the flavor of the tea beverage is poor and the production efficiency is seriously affected, so it cannot meet the requirements of industrial production.

Patent TW 1321452 discloses an extraction method for a packaged tea beverage. The method involves the tea beverage preparation by the method of mixing ice water (10°C to 15°C) and warm water (50°C to 55°C) solutions for extraction. During the extraction process, the extraction is accelerated by means of alternate stirring and pausing and at the end of the extraction, a tea beverage is prepared by mixing the two solution for extraction at different ratios. Patent TW 200942179A discloses an up-flow enclosed circulation extraction system, through which tea leaves are extracted by the solution for extraction by means of circulation extraction : water preheated to a certain temperature is added into an extraction barrel from the bottom thereof, and a tea extract liquid is extracted from the upper top of the extraction barrel, followed by circulation extraction to obtain a tea beverage.

In the patent TW 1321452, the use of two-step high and low temperature extractions increases the complexity and controllability of the process operation. Similarly, the patent TW 200942179A involves the use of an enclosed circulation extraction method, and the solution for tea extraction is circulated for a long time for tea leaf extraction, which is destructive to the solution for extraction, and requires that the extraction apparatus must be airtight and in an up-flow circulation, resulting in slightly poor universality.

Patent JP Laid No. 6-30703 discloses an ultra-high pressure extraction method for coffee and tea beverages, in which a beverage is prepared by ultra-high pressure and low temperature extraction first, then secondary high-temperature extraction of the residue (coffee or tea), and then formulation by mixing the extraction solutions, wherein the low temperature extraction prevents the loss and destruction of low-boiling volatiles. Patent JP Laid No. 4464337 discloses a method for producing a tea extract. In this method, a certain amount of water is first added to a cylindrical tea extraction kettle, such that the ratio of the volume of water above the filter net to the weight of tea leaves is 1.5 to 6.0; the temperature of the added water is 0°C to 70°C; after the addition is completed, the kettle is left to stand for 2 minutes to 20 minutes, and then the tea solution is withdrawn and the water is added at the same speed; and finally, a tea extract liquid with a quality of the tea solution of 10 to 100 times that of tea leaves is obtained.

### Summary of the Invention

A summary of the subject described in detail in the application is made below. This summary is not intended to limit the scope of the present application.

The present application provides a method for producing an extract liquid, comprising:
S100: extracting a material to be extracted with deionized water, and removing an extract solution after the extraction is completed;
S200: adding deionized water again to extract the extraction residue obtained by removing the extract solution, and removing the extract solution after the extraction is completed;
S210: optionally, repeating step S200 for extraction; and
S300: mixing the extract solution obtained in steps S100, S200 and optionally step S210 together to obtain the extract liquid.

In an embodiment of the present application, the material to be extracted can be coffee, tea leaves, and roots, stems, leaves, flowers, fruits or seeds of herbaceous plants.

In an embodiment of the present application, the material to be extracted can be tea leaves.

In an embodiment of the present application, the deionized water in each step can be at a temperature of from 5°C to 100°C, optionally, a temperature of from 5°C to 35°C or 35°C to 100°C.

In an embodiment of the present application, the mass ratio of the tea leaves to the deionized water used for extraction in each step can be in a range of 1 : 3 to 1 : 20; optionally, the mass ratio of the tea leaves to the deionized water used for extraction in each step is in a range of 1 : 5 to 1 : 15; and also optionally, the mass ratio of the tea leaves to the deionized water used for extraction in each step is in a range of 1 : 8 to 1 : 12.

In an embodiment of the present application, the extraction time in each step can be 0.5 minutes to 30 minutes; and optionally, the extraction time in each step is 1.5 minutes to 20 minutes; and also optionally, the extraction time in each step is 1.5 minutes to 12 minutes.

In an embodiment of the present application, a number of the repeating step S200 in step S210 can be 0 to 8, and optionally, the number of the repeating step S200 in step S210 is 0 to 6.

In an embodiment of the present application, the temperature of the deionized water used for extraction in each step can be the same or different, and optionally, the temperature of the deionized water used for extraction in each step is the same.

In an embodiment of the present application, during the whole extraction process, both deionized water at 5°C to 35°C and deionized water at 35°C to 100°C can be used.

In an embodiment of the present application, the amount of deionized water used for extraction in each step can be the same or different, and optionally, the amount of deionized water used for extraction in each step is the same.

In an embodiment of the present application, the deionized water can be anion-cation resin exchanged deionized water, distilled water or RO water.

In an embodiment of the present application, in step S100, the material to be extracted is added before or after the deionized water used for extraction is added.

In an embodiment of the present application, the extraction can be carried out with or without stirring.

In an embodiment of the present application, the extraction can be carried out by a tank, basket or drip extraction apparatus.

In an embodiment of the present application, the tea leaves can be selected from any one or more of black tea, green tea, dark tea, oolong tea, yellow tea, white tea and scented tea leaves.

The present application also provides an extract liquid prepared by the method for producing an extract liquid as described above.

The present application also provides a container-packed beverage obtained directly or by dilution of the extract liquid prepared by the method for producing an extract liquid as described above.

Additional features and advantages of the present application will be illustrated in the description which follows, and in part will be apparent from the description, or may be understood by the implementation of the present application. Other advantages of the present application can be realized and obtained through the schemes described in the specification and drawings.

### Brief Description of the Drawings

The accompanying drawings are used for providing an understanding of the technical solution in the present application and constitute a part of this specification, and are used, together with the embodiments of the present application, for explaining the technical solution in the present application but do not limit the technical solution in the present application.
Fig. 1 is the comparison chart of the sensory evaluation results of the bottled tea beverages of Example 1 and Comparative Example 1 in the present application;
Fig. 2 is the comparison chart of the sensory evaluation results of the bottled tea beverages of Example 2 and Comparative Example 2 in the present application;
Fig. 3 is the comparison chart of the sensory evaluation results of the bottled tea beverages of Example 3 and Comparative Example 3 in the present application;
Fig. 4 is the comparison chart of the sensory evaluation results of the bottled tea beverages of Example 4 and Comparative Example 4 in the present application;
Fig. 5 is the comparison chart of the sensory evaluation results of the bottled tea beverages of Example 5 and Comparative Example 5 in the present application;
Fig. 6 is the comparison chart of the sensory evaluation results of the bottled tea beverages of Example 6 and Comparative Example 6 in the present application;
Fig. 7 is the comparison chart of the sensory evaluation results of the bottled tea beverages of Example 7 and Comparative Example 7 in the present application;
Fig. 8 is the comparison chart of the sensory evaluation results of the bottled tea beverages of Example 8 and Comparative Example 8 in the present application;
Fig. 9 is the comparison chart of the sensory evaluation results of the bottled tea beverages of Example 9 and Comparative Example 9 in the present application;
Fig. 10 is the comparison chart of the sensory evaluation results of the bottled tea beverages of Example 10 and Comparative Example 10 in the present application;
Fig. 11 is a graph showing the variation of the extraction yield (cumulative) over the extraction time of Example 14 in the present application at different tea leaf-to-water ratios; and
Fig. 12 is a graph showing the variation of the extraction yield (cumulative) of Example 15 in the present application at different extraction times.

### Detailed Description of Embodiments

In order to make the objects, technical solutions and advantages of the present application clearer, the embodiments of the present application will be described in detail below in conjunction with the accompanying drawings. It should be noted that the embodiments in the present application and the features in the embodiments can be in any combination with each other without confliction.

An embodiment of the present application provides a method for producing an extract liquid, comprising:
S100: extracting a material to be extracted with deionized water, and removing an extract solution after the extraction is completed;
S200: adding deionized water again to extract the extraction residue obtained by removing the extract solution, and removing the extract solution after the extraction is completed;
S210: optionally, repeating step S200 for extraction; and
S300: mixing the extract solution obtained in steps S100, S200 and optionally step S210 together to obtain the extract liquid.

The production method for an extract liquid in an embodiment of the present application, by means of multiple extractions of the material to be extracted, not only effectively increases the extraction yield, reduces the product cost, but also shortens the extraction time and improves the production efficiency. In addition, the method can effectively inhibit the dissolution of bitter substances and improve the flavor of beverages.

In an embodiment of the present application, the extraction is realized by soaking a material to be extracted with deionized water.

In the present application, the term "extraction yield" is defined as a percentage of the dry weight of an actual extract to the dry weight of a raw material to be extracted (e.g., tea leaves).

In an embodiment of the present application, the material to be extracted can be coffee, tea leaves, roots, stems, leaves, flowers, fruits or seeds of herbaceous plants.

In an embodiment of the present application, the material to be extracted can be tea leaves.

In an embodiment of the present application, the deionized water in each step can be at a temperature of from 5°C to 100°C, optionally, a temperature of from 5°C to 35°C or 35°C to 100°C.

In an embodiment of the present application, the extraction process may only include natural temperature extraction or high temperature extraction, or may include both natural temperature extraction and high temperature extraction.

In an embodiment of the present application, when the material to be extracted is tea leaves, the mass ratio of the tea leaves to the deionized water used for extraction in each step can be in a range of 1 : 3 to 1 : 20; and optionally, the mass ratio of the tea leaves to the deionized water used for extraction in each step is in a range of 1 : 5 to 1 : 15; and also optionally, the mass ratio of the tea leaves to the deionized water used for extraction in each step is in a range of 1 : 8 to 1 : 12.

In an embodiment of the present application, the extraction time in each step can be 0.5 minutes to 30 minutes; and optionally, the extraction time in each step is 1.5 minutes to 20 minutes; and also optionally, the extraction time in each step is 1.5 minutes to 12 minutes.

In an embodiment of the present application, a number of the repeating step S200 in step S210 can be 0 to 8, for example, the number of the repeating step S200 can be 0, 1, 2, 3, 4, 5, 6, 7, or 8, that is the number of extractions during the whole production process is 2 to 10; with the increase of the number of extractions, the extraction yield can be better improved, however, considering the production efficiency and product flavor, the number of different extractions can be designed depending on different product characteristics; optionally, the number of repeating step S200 in step S210 is 0 to 6.

In an embodiment of the present application, the temperature of the deionized water used for extraction in each step can be the same or different, and optionally, the temperature of the deionized water used for extraction in each step is the same.

In an embodiment of the present application, during the whole extraction process, both deionized water at 5°C to 35°C and deionized water at 35°C to 100°C can be used.

In an embodiment of the present application, the amount of deionized water used for extraction in each step can be the same or different, and optionally, the amount of deionized water used for extraction in each step is the same.

In an embodiment of the present application, the deionized water can be anion-cation resin exchanged deionized water, distilled water or RO water (reverse osmosis water).

In the present application, the term "anion -cation resin exchanged deionized water" is defined as water obtained by passing through an anion and cation resin ion exchange column; the preparation process thereof can include: raw water→a multi-media filter→an activated carbon filter→a precision filter→a cation exchanger→an anion exchanger→an ion exchange column→a post precision filter.

The term "RO water (reverse osmosis water)" is defined as deionized water produced by a reverse osmosis-ion exchange apparatus; the preparation process thereof can include: raw water→a multi-media filter→an activated carbon filter->a precision filter->a reverse osmosis apparatus.

In an embodiment of the present application, in step S100, the material to be extracted can be added before or after the deionized water used for extraction is added.

In an embodiment of the present application, the extraction can be carried out with or without stirring.

In an embodiment of the present application, the deionized water can be supplied by injection or spraying. The spraying method facilitates to extract the active ingredients of a material to be extracted uniformly due to the uniform water contact with the material to be extracted.

As an apparatus for extraction, any one with a deionized water inlet and an extract liquid outlet can be used, for example, it may be a tank, basket or a drip extraction apparatus, for example, an extraction kettle or a cylindrical drip extraction kettle.

The nozzle angle and height of the drip extraction apparatus can be adjusted such that the water can be uniformly sprayed onto the upper surface of the material to be extracted. Water can be sprayed onto the upper surface of the material to be extracted in the form of droplets or mist. For example, coffee extractors SK-EXTl0 and SK-EXT-15 manufactured by Sanyou Machine Co., Ltd. with a sprayer on the upper part, and multifunctional extraction devices TEXl512 and TEX2015 manufactured by Izumi food MA °C HINERY °CO., LTD., can be used.

In an embodiment of the present application, the apparatus used in the extraction can be closed or open, optionally closed, which can avoid the deterioration of the working environment caused by the escape of steam during the extraction operation, and can also avoid the problems such as quality degradation due to the volatilization and oxidation of aroma components. For example, the extractor may be a closed cylindrical extractor.

In an embodiment of the present application, the apparatus used for extraction may have meshes, grid plates or other nets for separating the material to be extracted and the extract liquid.

An embodiment of the present application also provides an extract liquid prepared by the method for producing an extract liquid as described above.

An embodiment of the present application also provides a container-packed beverage obtained directly or by dilution of the extract liquid prepared by the method for producing an extract liquid as described above.

An embodiment of the present application also provides a method for producing a tea extract liquid, comprising:
S100: extracting tea leaves with deionized water, and removing a tea solution after the extraction is completed;
S200: adding deionized water again to extract the remaining tea leaves obtained by removing the tea solution, and removing the tea solution after the extraction is completed;
S210: optionally, repeating step S200 for extraction; and
S300: mixing the tea solution obtained in steps S100, S200 and optionally step S210 together to obtain the extract liquid.

The production method for a tea extract liquid in an embodiment of the present application, by means of multiple extractions of the tea leaves, not only effectively increases the extraction yield, reduces the product cost, but also shortens the extraction time and improves the production efficiency. In addition, the method can effectively inhibit the dissolution of bitter substances and improve the flavor of tea beverages.

In an embodiment of the present application, the extraction is realized by soaking tea leaves with deionized water.

In an embodiment of the present application, the deionized water in each step can be at a temperature of from 5°C to 100°C, optionally, a temperature of from 5°C to 35°C or 35°C to 100°C. The deionized water at 5°C to 35°C is usually deionized water at the natural ambient temperature, which can be obtained without consuming energy for cooling or heating, avoiding energy consumption. Specifically an appropriate temperature in a range of 5°C to 35°C can be selected depending on the season or regional environment. However, due to season or regional environmental reasons, the temperature of deionized water at the natural ambient temperature may not meet the requirements for use. At this time, the required temperature can be met by cooling or heating.

Natural temperature extraction is carried out with deionized water from 5°C to 35°C and the natural temperature extraction is beneficial to inhibit the dissolution of bitter substances and improve the flavor of tea beverages. The high-temperature extraction is carried out with deionized water at 35°C to 100°C, and the high temperature is beneficial to the increase of the extraction yield.

In an embodiment of the present application, the extraction process may only include natural temperature extraction or high temperature extraction, or may include both natural temperature extraction and high temperature extraction.

In an embodiment of the present application, the mass ratio of the tea leaves to the deionized water used for extraction in each step can be in a range of 1 : 3 to 1 : 20; and when the tea leaf-to-water ratio is too small, the tea leaves cannot be completely infiltrated; when the tea leaf-to-water ratio is too large, the extraction yield of tea leaves cannot be effectively increased, and more energy consumption will be wasted, and when the mass ratio of the tea leaves to the deionized water used for extraction is in a range of 1 : 3 to 1 : 20, the tea leaves can be completely infiltrated, and also the extraction yield can be effectively increased; optionally, the mass ratio of the tea leaves to the deionized water used for extraction in each step is in a range of 1 : 5 to 1 : 15; and also optionally, the mass ratio of the tea leaves to the deionized water used for extraction in each step is in a range of 1 : 8 to 1 : 12.

In an embodiment of the present application, the extraction time in each step can be 0.5 minutes to 30 minutes; and optionally, the extraction time in each step is 1.5 minutes to 20 minutes; and also optionally, the extraction time in each step is 1.5 minutes to 12 minutes.

In an embodiment of the present application, the mass ratio of the tea leaves to the deionized water used for extraction in each step can be in a range of 1 : 3 to 1 : 15, and the extraction time in each step is 2 minutes to 10 minutes.

In an embodiment of the present application, a number of the repeating step S200 in step S210 can be 0 to 8, for example, the number of the repeating step S200 can be 0, 1, 2, 3, 4, 5, 6, 7, or 8, that is the number of extractions during the whole production process is 2 to 10; with the increase of the number of extractions, the extraction yield can be better improved, however, considering the production efficiency and product flavor, the number of different extractions can be designed depending on different product characteristics; optionally, the number of repeating step S200 in step S210 is 0 to 6.

In an embodiment of the present application, the mass ratio of the tea leaves to the deionized water used for the whole extraction process can be in a range of 1 : 30 to 1 : 60. Too little water for tea leaf extraction cannot be for effective extraction. Too much water for tea leaf extraction renders over extraction, resulting in poor flavor. Optionally, the mass ratio of the tea leaves to the deionized water used for the whole extraction process is in a range of 1 : 30 to 1 : 40.

In an embodiment of the present application, the temperature of the deionized water used for extraction in each step can be the same or different, and optionally, the temperature of the deionized water used for extraction in each step is the same.

When the temperature of deionized water used for extraction in each step is different, deionized water at 5°C to 35°C can be used for extraction in some steps, and deionized water at 35°C to 100°C can be used for extraction in some steps, that is, during the whole extraction process, both deionized water at 5°C to 35°C and deionized water at 35°C to 100°C are used.

In an embodiment of the present application, the amount of deionized water used for extraction in each step can be the same or different, and optionally, the amount of deionized water used for extraction in each step is the same.

In an embodiment of the present application, the production method can comprises:
S100: with the mass ratio of the tea leaves to the deionized water used for a single extraction in a range of 1 : 3 to 1 : 15, after adding the deionized water, soaking the tea leaves in the deionized water for 2 minutes to 10 minutes for extraction, after the extraction is completed, removing a tea solution;
S200: adding the same amount of deionized water as in step S100 again to extract the remaining tea leaves obtained in step S100, the extraction time being the same as in step S100, and removing the tea solution after the extraction is completed;
S210: optionally, repeating step S200 for 0 times to 6 times; and
S300: mixing the tea solution obtained in steps S100, S200 and optionally step S210 together to obtain the extract liquid.

In an embodiment of the present application, the deionized water can be anion-cation resin exchanged deionized water, distilled water or RO water (reverse osmosis water).

In an embodiment of the present application, in step S100, the tea leaves are added before or after the deionized water used for extraction is added.

In an embodiment of the present application, the extraction can be carried out with or without stirring.

In an embodiments of the present application, the tea leaves may be tea leaves processed from fresh leaves of tea species of Camellia (Camellia sinensis or Camellia assimica); and the tea leaves can be leaves of green tea, white tea, yellow tea, qing tea (oolong tea), black tea, dark tea (such as puer tea) and reprocessed tea (scented jasmine tea) or any other type of tea depending on the degree of fermentation of the tea leaves, including decaffeinated or low-caffeine tea leaves made by decaffeinating all of the above the tea leaves, including green tea, oolong tea and black tea leaves. The black tea leaves may include tea leaves of fermented tea leaves such as Darjeeling, Assam, and Sri Lanka, known as black tea leaves; the green tea leaves can include green tea leaves of sencha, gyokuro, sweet tea, etc., obtained from tea leaves of the Camellia, C.assaimi, Yabukita, other Graptoviria, etc., by tea-production process; and the oolong tea may include tea leaves of semi-fermented teas such as Tieguanyin, composite oolong, sezhong, huangjin gui, and Wuyi rock tea, which are collectively referred to as oolong tea.

The tea leaves used may be in the form of uncut leaves or small cut leaves, or in a mixed form thereof, depending on the type and the shape of tea leaves. The particle size of tea leaves has an impact on the speed of extraction, and tea leaves of small particles are easier to achieve extraction balance.

In an embodiment of the present application, the deionized water can be supplied by injection or spraying. The spraying method facilitates to extract the active ingredients of tea leaves uniformly due to the uniform water contact with the tea leaves.

As an apparatus for extraction, any one with a deionized water inlet and an extract liquid outlet can be used, for example, it may be a tank, basket or drip extraction apparatus, for example, a tea extraction kettle or a cylindrical drip-type tea extraction kettle.

The nozzle angle and height of the drip extraction apparatus can be adjusted such that the water can be uniformly sprayed onto the upper surface of the tea leaves. Water can be sprayed onto the upper surface of the tea leaves in the form of droplets or mist. For example, coffee extractors SK-EXTl0 and SK-EXT-15 manufactured by Sanyou Machine Co., Ltd. with a sprayer on the upper part, and multifunctional extraction devices TEXl512 and TEX2015 manufactured by Izumi food MA °C HINERY °CO., LTD., can be used.

In an embodiment of the present application, the apparatus used in the extraction can be closed or open, optionally closed, which can avoid the deterioration of the working environment caused by the escape of steam during the extraction operation, and can also avoid the problems such as quality degradation due to the volatilization and oxidation of aroma tea components. For example, the extractor may be a closed cylindrical extractor.

In an embodiment of the present application, the apparatus used for extraction may have meshes, grid plates or other nets for separating the tea leaves and the tea extract liquid.

An embodiment of the present application also provides a tea extract liquid prepared by the method for producing a tea extract liquid as described above.

An embodiment of the present application also provides a container-packed tea beverage obtained directly or by dilution of the tea extract liquid prepared by the method for producing a tea extract liquid as described above.

In the commercial production, the tea extract liquid is directly cooled, purified by a centrifuge (5000 RPM, 8000 L/h) and then sterilized by UHT (a F0 value of at least 4), aseptically filled into a concentrated tea beverage for supply catering channels or households as a tea base for DIY use (adding a fruit juice to make a juice tea, adding a fresh milk to make a milk tea, etc.).

The centrifuge model Hitachi CR21 GII used in the centrifuge purification treatment in the following examples and comparative examples is used for a static centrifugation treatment.

A house-made extraction apparatus used in the following examples and comparative examples, which is composed of a 304-Model stainless steel bucket (5L or 1L in volume) with a sealed cover and an electric heating thermostatic water bath (HWS-24) produced by Shanghai Huitai Company. The tea leaves and water for extraction are put into a stainless steel bucket and then sealed with a sealed cover, then same is put into an electric heating thermostatic water bath for extraction under constant temperature conditions, and the tea solution is poured out after the extraction is completed.

### Example 1

Production of cold extracted green tea beverage, including:
S 100: adding 44 g of Longj ing green tea leaves produced in Hangzhou, Zhejiang and 440 g of RO water at room temperature (25°C) into a house-made 5 L extraction apparatus, such that the green tea leaves are soaked in the RO water for 10 minutes by leaving to stand without stirring for extraction, and after the extraction is completed, leaching a tea solution (extract liquid 1) for later use;
S200: adding 440 g of RO water at room temperature (25°C) to the extraction apparatus again to extract the remaining tea leaves in step S100 for 10 minutes, and after the extraction is completed, leaching the tea solution (an extract liquid 2) for later use;
S210: repeating step S200 once to obtain an extract liquid 3;
S300: combining the extract liquids 1 to 3 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage with a solid content concentration of 2.3 g/L, sterilizing and then bottling same to obtain a bottled tea beverage.

### Comparative example 1

S100': adding 44 g of Longjing green tea leaves produced in Hangzhou, Zhejiang and of the same type and batch as those in example 1 and 1320 g of RO water at room temperature (25°C) into a house-made 5 L extraction apparatus, such that the green tea leaves are soaked in the RO water for 30 minutes by leaving to stand without stirring for extraction, and after the extraction is completed, leaching a tea solution (an extract liquid 1') for later use;
S200': cooling the extract liquid 1' obtained in step S 100', and purifying same in a centrifuge (5000 RPM, 10 minutes) to obtain a clearer tea extract liquid;
S300': formulating the tea extract liquid obtained in step S200' into a beverage with a solid content concentration of 2.3 g/L, sterilizing and then bottling same to obtain a bottled tea beverage.

### Test example 1

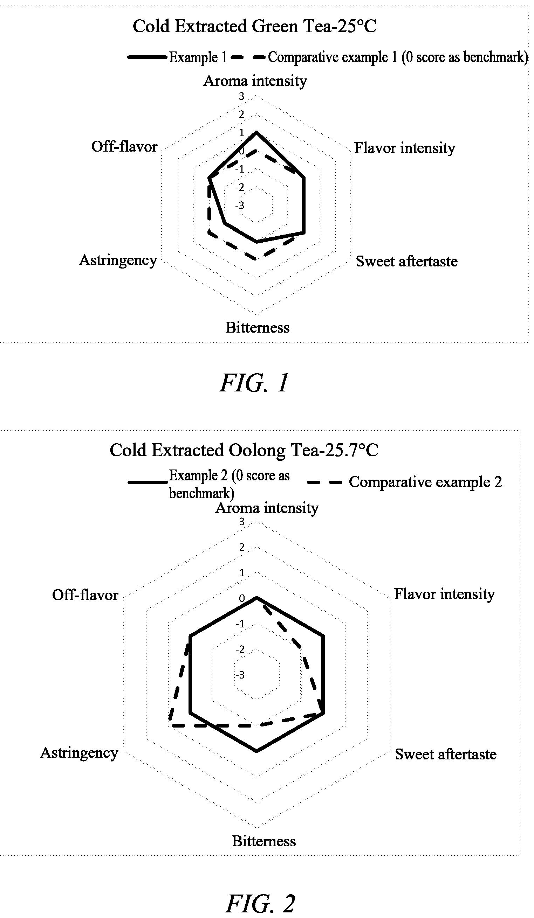

1. The solid content and extraction yield of the tea extract liquids prepared in Example 1 and Comparative Example 1 above are calculated. The test results are as shown in Table 1.1.
2. Referring to the document Sensory Evaluation Techniques, 2nd Edition, Meilgaard Civille Carr. Scaling introduction, the taste sensory evaluations of aroma, flavor intensity, sweet aftertaste, bitterness and astringency of the bottled tea drinks prepared in the above Example 1 and Comparative Example 1 are carried out using a 5-scale evaluation method (-2 score to +2 score). The test results are as shown in Table 1.2 and Figure 1.

**Table 1.1**

| | Unit | Example 1 | Comparative example 1 |
|---|---|---|---|
| Green tea | g | 44 | 44 |
| RO water | | 440 g/extraction × 3 extractions = 1320 g | 1320 g |
| Extraction conditions | | Room temperature RO water (25°C) for 10 minutes each extraction, 3 extractions in total | Room temperature RO water (25°C) for 30 minutes of extraction, 1 extraction in total |
| Weight of extract liquid | g | 1086.6 | 1096 |
| Concentration of | Bx | 1.05 | 0.93 |
| extract liquid | (Brix) | | |
| Extraction yield | % | 25.9% | 23.2 % |
| Tea polyphenols | Mg/L | 859 | 757 |
| Caffeine | Mg/L | 111 | 88.6 |
| Amino acids | Mg/L | 129 | 119.6 |

Compared with Comparative Example 1, the extraction yield of the production method of Example 1 is increased by 12.2%.

**Table 1.2**

| Cold Extracted Green Tea Beverage | Example 1 | Comparative example 1 (0 score as benchmark) |
|---|---|---|
| Aroma intensity | +1 | 0 |
| Flavor Intensity | 0 | 0 |
| Sweet aftertaste | 0 | 0 |
| Bitterness | -1 | 0 |
| Astringency | -1 | 0 |
| Off-flavor | 0 | 0 |

It can be seen that the bottled tea drink of Example 1 has improved aroma and reduced bitterness.

### Example 2

Production of cold extracted oolong tea beverage, including:
S100: adding 43.5 g of oolong tea leaves of tieguanyin produced in Anxi, Fujian, and 435 g of RO water at room temperature (25.7°C) into a house-made 5 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 435 g of RO water at room temperature (25.7°C) to the extraction apparatus again to extract the remaining tea leaves in step S100 for 10 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage of 14.5 g/L (on the basis of dried tea leaves), sterilizing and then bottling same to obtain a bottled tea beverage.

### Comparative example 2

S100': adding 43.5 g of oolong tea leaves of tieguanyin produced in Anxi, Fujian and of the same type and batch as those in example 2 and 1740 g of RO water at room temperature (25.7°C) into a house-made 5 L extraction apparatus, such that the oolong tea leaves are soaked in the RO water for 40 minutes by leaving to stand without stirring for extraction, and after the extraction is completed, leaching a tea solution (an extract liquid 1') for later use;
S200': cooling the extract liquid 1' obtained in step S 100', and purifying same in a centrifuge (5000 RPM, 10 minutes) to obtain a clearer tea extract liquid; and
S300': formulating the tea extract liquid obtained in step S200' into a beverage of 14.5 g/L (on the basis of dried tea leaves), sterilizing and then bottling same to obtain a bottled tea beverage.

### Test example 2

1. The solid content and extraction yield of the tea extract liquids prepared in Example 2 and Comparative Example 2 above are calculated. The test results are as shown in Table 2.1.
2. The taste sensory evaluations of aroma, flavor intensity, sweet aftertaste, bitterness and astringency of the bottled tea drinks prepared in the above Example 2 and Comparative Example 2 are carried out using a 5-scale evaluation method (-2 score to +2 score). The test results are as shown in Table 2.2 and Figure 2.

**Table 2.1**

| | Unit | Example 2 | Comparative example 2 |
|---|---|---|---|
| Oolong tea | g | 43.5 | 43.5 |
| RO water | | 435 g/extraction × 4 extractions = 1740 g | 1740 g |
| Extraction conditions | / | Room temperature RO water (25.7°C) for 10 minutes each extraction, 4 extractions in total | Room temperature RO water (25.7°C) for 40 minutes of extraction, 1 extraction in total |
| Weight of extract | g | 1612.28 | 1594.96 |
| liquid | | | |
| Concentration of extract liquid | Bx | 0.76 | 0.66 |
| Extraction yield | % | 28.2 % | 24.2% |
| Tea polyphenols | Mg/L | 620 | 524 |
| Caffeine | Mg/L | 71.3 | 60.4 |
| Amino acids | Mg/L | 67.7 | 59 |

Compared with Comparative Example 2, the extraction yield of the production method of Example 2 is increased by 13.2%.

**Table 2.2**

| Cold Extracted Oolong Tea Beverage | Example 2 (0 score as benchmark) | Comparative example 2 |
|---|---|---|
| Aroma intensity | 0 | 0 |
| Flavor Intensity | 0 | -1 |
| Sweet aftertaste | 0 | 0 |
| Bitterness | 0 | -1 |
| Astringency | 0 | +1 |
| Off-flavor | 0 | 0 |

It can be seen that the overall flavor of Comparative Example 2 is lighter and more astringent than that of Example 2.

### Example 3

Production of cold extracted black tea beverage, including:
S100: adding 70 g of CTC (Crush Tear Curl) black tea leaves produced in Sri Lanka and 700 g of RO water at room temperature (24.1°C) into a house-made 5 L extraction apparatus, such that the black tea leaves are soaked in the RO water for 7 minutes by leaving to stand without stirring for extraction, and after the extraction is completed, leaching a tea solution (an extract liquid 1) for later use;
S200: adding 700 g of RO water at room temperature (24.1°C) to the extraction apparatus again to extract the remaining tea leaves in step S100 for 7 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: formulating the tea extract liquid obtained in step S4 into a beverage of 8.0 g/L (on the basis of dried tea leaves), sterilizing and then bottling same to obtain a bottled tea beverage.

### Comparative example 3

S 100': adding 70 g of CTC black tea leaves produced in Sri Lanka and of the same type and batch as those in example 3 and 2800 g of RO water at room temperature (24.1°C) into a house-made 5 L extraction apparatus, such that the black tea leaves are soaked in the RO water for 7 minutes by leaving to stand without stirring for extraction, and after the extraction is completed, leaching a tea solution (an extract liquid 1') for later use;
S200': cooling the extract liquid 1' obtained in step S 100', and purifying same in a centrifuge (5000 RPM, 10 minutes) to obtain a clearer tea extract liquid;
S300': formulating the tea extract liquid obtained in step S200' into a beverage of 8.0 g/L (on the basis of dried tea leaves), sterilizing and then bottling same to obtain a bottled tea beverage.

### Test example 3

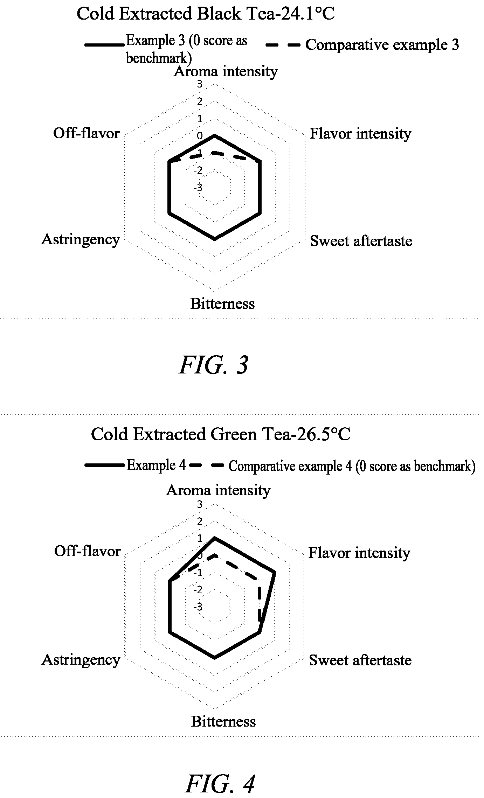

1. The solid content and extraction yield of the tea extract liquids prepared in Example 3 and Comparative Example 3 above are calculated. The test results are as shown in Table 3.1.
2. The taste sensory evaluations of aroma, flavor intensity, sweet aftertaste, bitterness and astringency of the bottled tea drinks prepared in the above Example 3 and Comparative Example 3 are carried out using a 5-scale evaluation method (-2 score to +2 score). The test results are as shown in Table 3.2 and Figure 3.

**Table 3.1**

| | Unit | Example 3 | Comparative example 3 |
|---|---|---|---|
| Green tea | g | 70 | 70 |
| RO water | | 700 g/extraction × 4 extractions = 2800 g | 2800 g |
| Extraction conditions | | Room temperature RO water (24. 1°C) for 7 minutes each extraction, 4 extractions in total | Room temperature RO water (24.1 °C) for 28 minutes of extraction, 1 extraction in total |
| Weight of extract liquid | g | 2579.7 | 2680 |
| Concentration of | Bx | 0.71 | 0.64 |
| extract liquid | | | |
| Yield | % | 26.2% | 24.5% |
| Tea polyphenols | Mg/L | 311 | 288 |
| Caffeine | Mg/L | 64.7 | 65.6 |
| Amino acids | Mg/L | 207 | 190 |

Compared with Comparative Example 3, the extraction yield of the production method of Example 3 is increased by 6.9%.

**Table 3.2**

| Cold Extracted Black Tea Beverage | Example 3 (0 score as benchmark) | Comparative example 3 |
|---|---|---|
| Aroma intensity | 0 | -1 |
| Flavor Intensity | 0 | 0 |
| Sweet aftertaste | 0 | 0 |
| Bitterness | 0 | 0 |
| Astringency | 0 | 0 |
| Off-flavor | 0 | 0 |

It can be seen that the aroma of Comparative Example 3 is lighter than that of Example 3.

### Example 4

Production of cold extracted green tea beverage, including:
S100: adding 6.325 kg of Longjing green tea leaves produced in Hangzhou, Zhejiang into a SH/3-191109 Model cylindrical tea extraction kettle from the HI-TEC Company, and spraying RO water at room temperature (26.5°C) at 400 L/H from the cylindrical tea extraction kettle to the green tea leaves uniformly for 7 minutes, such that the green tea leaves are soaked in the RO water for 5 minutes by leaving to stand without stirring for extraction, and after the extraction is completed, leaching a tea solution (an extract liquid 1) for later use;
S200: uniformly spraying RO water at room temperature (26.5°C) again at 400 L/H from the cylindrical tea extraction kettle to the remaining tea leaves in step S100 for 7 minutes, and extracting same for 5 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 400 L/H) to obtain a clearer tea extract liquid; and
S400: formulating the tea extract liquid obtained in step S300 into a beverage with a solid content concentration of 2.3 g/L, sterilizing and then bottling same to obtain a bottled tea beverage.

### Comparative example 4

S100': adding 38 L of RO water at room temperature (26.5°C) into a cylindrical tea extraction kettle from the HI-TEC Company (SH/3-190109), weighing 6.325 kg of Longjing green tea leaves produced in Hangzhou, Zhejiang and of the same type and batch as those in Example 4, and adding same into the cylindrical tea extraction kettle, such that the green tea leaves are soaked in RO water for 12 minutes by leaving to stand without stirring for extraction; then, uniformly spraying RO water at room temperature (26.5°C) at 247.8L/H, and removing the tea solution at the same flow rate; and after the spraying of 36 minutes, leaching the tea solution (an extract liquid 1') for later use;
S200': cooling the extract liquid 1' obtained in step S 100', and purifying same in a centrifuge (5000 RPM, 400 L/H) to obtain a clearer tea extract liquid;
S300': formulating the tea extract liquid obtained in step S200' into a beverage with a solid content concentration of 2.3 g/L, sterilizing and then bottling same to obtain a bottled tea beverage.

### Test example 4

1. The solid content and extraction yield of the tea extract liquids prepared in Example 4 and Comparative Example 4 above are calculated. The test results are as shown in Table 4.1.
2. The taste sensory evaluations of aroma, flavor intensity, sweet aftertaste, bitterness and astringency of the bottled tea drinks prepared in the above Example 4 and Comparative Example 4 are carried out using a 5-scale evaluation method (-2 score to +2 score). The test results are as shown in Table 4.2 and Figure 4.

**Table 4.1**

| | Unit | Example 4 | Comparative example 4 |
|---|---|---|---|
| Green tea | kg | 6.325 | 6.325 |
| RO water | kg | 186.67 kg | 186.67 kg |
| Extraction | | 12 minutes each time | 12 minutes of static |

| conditions | | (7 minutes of water spraying; 5 minutes of extraction), in total of 4 and a total time of 48 minutes | extraction; 36 minutes of dynamic extraction; total time of 48 minutes |
|---|---|---|---|
| Weight of extract liquid | kg | 171.18 | 168.58 |
| Concentration of extract liquid | Bx | 0.96 | 0.975 |
| Yield | % | 26.0 | 26.0 |
| Tea polyphenols | Mg/L | 718 | 728 |
| Caffeine | Mg/L | 96.9 | 99.1 |
| Amino acids | Mg/L | 215.3 | 209.2 |

**Table 4.2**

| Cold Extracted Green Tea Beverage | Example 4 | Comparative example 4 (0 score as benchmark) |
|---|---|---|
| Aroma intensity | +1 | 0 |
| Flavor Intensity | +1 | 0 |
| Sweet aftertaste | 0 | 0 |
| Bitterness | 0 | 0 |
| Astringency | 0 | 0 |
| Off-flavor | 0 | 0 |

It can be seen that under the same extraction yield using different extraction processes, the aroma and overall flavor of Example 4 are stronger. Also, the tea polyphenol and caffeine that affect the flavor is lower than those of the comparative example, and the amino acid is higher than that of the comparative example.

### Example 5

Production of cold extracted oolong tea beverage, including:
S100: adding 43.5 g of oolong tea leaves of tieguanyin produced in Anxi, Fujian, and 435 g of iced RO water (5°C) into a house-made 5 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 435 g of iced RO water (5°C) to the extraction apparatus again to extract the remaining tea leaves in step S100 for 10 minutes, and after the extraction is completed, leaching the tea solution (an extract liquid 2) for later use;
S210: repeating step S200 4 times to obtain an extract liquid 3, an extract liquid 4, an extract liquid 5 and an extract liquid 6;
S300: combining the extract liquids 1 to 6 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage of 14.5 g/L (on the basis of dried tea leaves), sterilizing and then bottling same to obtain a bottled tea beverage.

### Comparative example 5

S100': adding 43.5 g of oolong tea leaves of tieguanyin produced in Anxi, Fujian, and of the same type and batch as those in example 5 and 2610 g of iced RO water (5°C) into a house-made 5 L extraction apparatus, such that the oolong tea leaves are soaked in the RO water for 60 minutes by leaving to stand without stirring for extraction, and after the extraction is completed, leaching a tea solution (an extract liquid 1') for later use;
S200': cooling the extract liquid 1' obtained in step S100', and purifying same in a centrifuge (5000 RPM, 10 minutes) to obtain a clearer tea extract liquid; and
S300': formulating the tea extract liquid obtained in step S200' into a beverage of 14.5 g/L (on the basis of dried tea leaves), sterilizing and then bottling same to obtain a bottled tea beverage.

### Test example 5

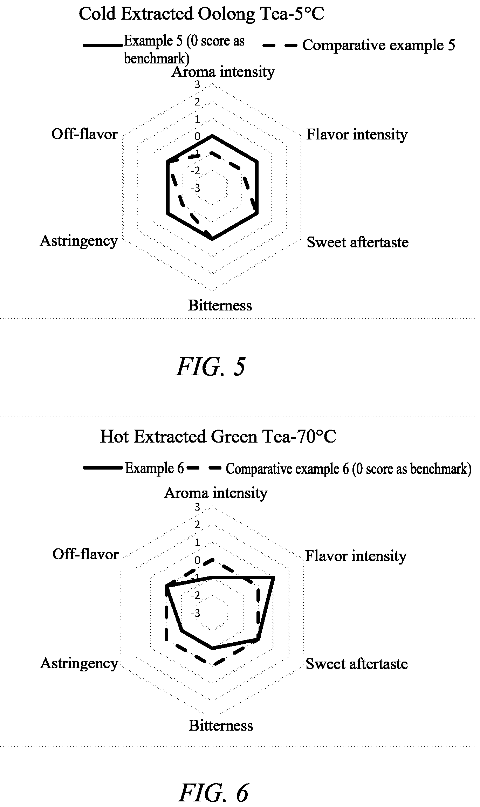

1. The solid content and extraction yield of the tea extract liquids prepared in Example 5 and Comparative Example 5 above are calculated. The test results are as shown in Table 5.1.
2. The taste sensory evaluations of aroma, flavor intensity, sweet aftertaste, bitterness and astringency of the bottled tea drinks prepared in the above Example 5 and Comparative example 5 are carried out using a 5-scale evaluation method (-2 score to +2 score). The test results are as shown in Table 5.2 and Figure 5.

**Table 5.1**

| | Unit | Example 5 | Comparative example 5 |
|---|---|---|---|
| Oolong tea | g | 43.5 | 43.5 |
| RO water | | 435 g/extraction × 6 | 2610 g |
| | | extractions = 2610 g | |
| Extraction conditions | / | Iced RO water (5°C) for 10 minutes each extraction, 6 extractions in total | Extraction with iced RO water (5°C) for 60 minutes, 1 extraction in total |
| Weight of extract liquid | g | 2511.8 | 2514 |
| Concentration of extract liquid | Bx | 0.39 | 0.25 |
| Extraction yield | % | 22.5% | 14.4% |
| Tea polyphenols | Mg/L | 468 | 288 |
| Caffeine | Mg/L | 49.4 | 27.7 |
| Amino acids | Mg/L | 82.7 | 40.6 |

Compared with Comparative Example 5, the extraction yield of the production method of Example 5 is increased by 56.3%.

**Table 5.2**

| Cold Extracted Oolong Tea Beverage | Example 5 (0 score as benchmark) | Comparative example 5 |
|---|---|---|
| Aroma intensity | 0 | -1 |
| Flavor Intensity | 0 | -1 |
| Sweet aftertaste | 0 | 0 |
| Bitterness | 0 | 0 |
| Astringency | 0 | -1 |
| Off-flavor | 0 | 0 |

It can be seen that the overall flavor of Comparative Example 5 is lighter than that of Example 5.

### Example 6

Production of hot extracted green tea beverage, including:
S 100: adding 44 g of Longj ing green tea leaves produced in Hangzhou, Zhejiang and 440 g of RO water (70°C) into a house-made 5 L extraction apparatus, such that the green tea leaves are soaked in the RO water for 2.67 minutes by leaving to stand without stirring for extraction, and after the extraction is completed, leaching a tea solution (an extract liquid 1) for later use;
S200: adding 440 g of RO water (70°C) to the extraction apparatus again to extract the remaining tea leaves in step S100 for 2.67 minutes, and after the extraction is completed, leaching the tea solution (an extract liquid 2) for later use;
S210: repeating step S200 once to obtain an extract liquid 3;
S300: combining the extract liquids 1 to 3 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage with a solid content concentration of 2.3 g/L, sterilizing and then bottling same to obtain a bottled tea beverage.

### Comparative example 6

S100': adding 44 g of Longjing green tea leaves produced in Hangzhou, Zhejiang and of the same type and batch as those in example 6 and 1320 g of RO water (70°C) into a house-made 5 L extraction apparatus, such that the green tea leaves are soaked in the RO water for 8 minutes by leaving to stand without stirring for extraction, and after the extraction is completed, leaching a tea solution (an extract liquid 1') for later use;
S200': cooling the extract liquid 1' obtained in step S100', and purifying same in a centrifuge (5000 RPM, 10 minutes) to obtain a clearer tea extract liquid; and
S300': formulating the tea extract liquid obtained in step S200' into a beverage with a solid content concentration of 2.3 g/L, sterilizing and then bottling same to obtain a bottled tea beverage.

### Test example 6

1. The solid content and extraction yield of the tea extract liquids prepared in Example 6 and Comparative Example 6 above are calculated. The test results are as shown in Table 6.1.
2. The taste sensory evaluations of aroma, flavor intensity, sweet aftertaste, bitterness and astringency of the bottled tea drinks prepared in the above Example 6 and Comparative Example 6 are carried out using a 5-scale evaluation method (-2 score to +2 score). The test results are as shown in Table 6.2 and Figure 6.

**Table 6.1**

| | Unit | Example 6 | Comparative example 6 |
|---|---|---|---|
| Green tea | g | 44 | 44 |
| RO water | | 440 g/extraction × 3 extractions = 1320 g | 1320 g |
| Extraction conditions | | RO water (70°C) for 2.67 minutes each | Extraction with RO water (70°C) for 8 |
| | | extraction, 3 extractions in total | minutes, 1 extraction in total |
| Weight of extract liquid | g | 1111.45 | 1100 |
| Concentration of extract liquid | Bx | 1.39 | 1.25 |
| Yield | % | 35.1% | 31.3% |
| Tea polyphenols | Mg/L | 1084 | 1006 |
| Caffeine | Mg/L | 122 | 108.8 |
| Amino acids | Mg/L | 113 | 106 |

Compared with Comparative Example 6, the extraction yield of the production method of Example 6 is increased by 12.1%.

**Table 6.2**

| Hot Extracted Green Tea Beverage | Example 6 | Comparative example 6 (0 score as benchmark) |
|---|---|---|
| Aroma intensity | -1 | 0 |
| Flavor Intensity | +1 | 0 |
| Sweet aftertaste | 0 | 0 |
| Bitterness | -1 | 0 |
| Astringency | -1 | 0 |
| Off-flavor | 0 | 0 |

It can be seen that the bottled tea beverage of Example 6 has a higher flavor intensity and lower bitterness.

### Example 7

Production of hot extracted oolong tea beverage, including:
S100: adding 43.5 g of oolong tea leaves of tieguanyin produced in Anxi, Fujian, and 435 g of RO water (90°C) into a house-made 5 L extraction apparatus, such that the oolong tea leaves are soaked in the RO water for 2.67 minutes by leaving to stand without stirring for extraction, and after the extraction is completed, leaching a tea solution (an extract liquid 1) for later use;
S200: adding 435 g of RO water (90°C) to the extraction apparatus again to extract the remaining tea leaves in step S100 for 2.67 minutes, and after the extraction is completed, leaching the tea solution (an extract liquid 2) for later use;
S210: repeating step S200 once to obtain an extract liquid 3;
S300: combining the extract liquids 1 to 3 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage of 14.5 g/L (on the basis of dried tea leaves), sterilizing and then bottling same to obtain a bottled tea beverage.

### Comparative example 7

S100': adding 43.5 g of oolong tea leaves of tieguanyin produced in Anxi, Fujian, and of the same type and batch as those in example 7 and 1305 g of RO water (90°C) into a house-made 5 L extraction apparatus, such that the oolong tea leaves are soaked in the RO water for 8 minutes by leaving to stand without stirring for extraction, and after the extraction is completed, leaching a tea solution (an extract liquid 1') for later use;
S200': cooling the extract liquid 1' obtained in step S 100', and purifying same in a centrifuge (5000 RPM, 10 minutes) to obtain a clearer tea extract liquid; and
S300': formulating the tea extract liquid obtained in step S200' into a beverage of 14.5 g/L (on the basis of dried tea leaves), sterilizing and then bottling same to obtain a bottled tea beverage.

### Test example 7

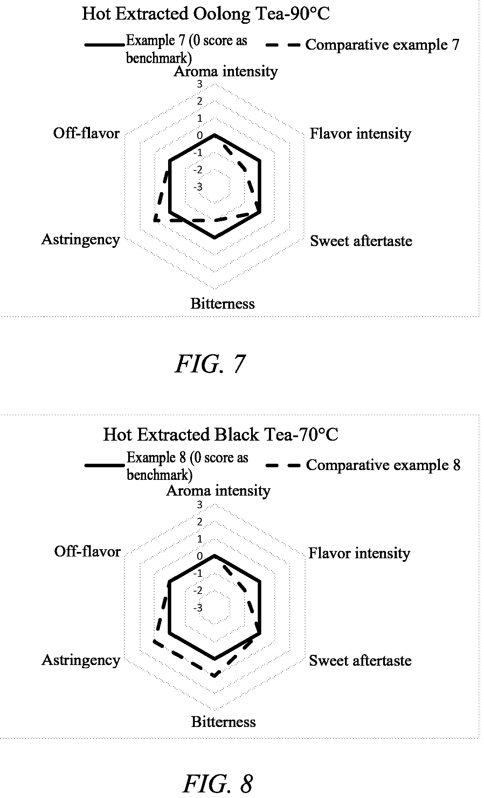

1. The solid content and extraction yield of the tea extract liquids prepared in Example 7 and Comparative Example 7 above are calculated. The test results are as shown in Table 7.1.
2. The taste sensory evaluations of aroma, flavor intensity, sweet aftertaste, bitterness and astringency of the bottled tea drinks prepared in the above Example 7 and Comparative Example 7 are carried out using a 5-scale evaluation method (-2 score to +2 score). The test results are as shown in Table 7.2 and Figure 7.

**Table 7.1**

| | Unit | Example 7 | Comparative example 7 |
|---|---|---|---|
| Oolong tea | g | 43.5 | 43.5 |
| RO water | | 435 g/extraction × 3 extractions = 1305 g | 1305 g |
| Extraction conditions | / | RO water (90°C) for 2.67 minutes each extraction, 3 | Extraction with RO water (90°C) for 8 minutes, 1 extraction in |
| | | extractions in total | total |
| Weight of extract liquid | g | 1138.9 | 1153.6 |
| Concentration of extract liquid | Bx | 1.26 | 1.06 |
| Yield | % | 33.0% | 28.1% |
| Tea polyphenols | Mg/L | 883 | 757 |
| Caffeine | Mg/L | 109.5 | 91.1 |
| Amino acids | Mg/L | 64.8 | 54.9 |

Compared with Comparative Example 7, the extraction yield of the production method of Example 7 is increased by 17.4%.

**Table 7.2**

| Hot Extracted Oolong Tea Beverage | Example 7 (0 score as benchmark) | Comparative example 7 |
|---|---|---|
| Aroma intensity | 0 | 0 |
| Flavor Intensity | 0 | -1 |
| Sweet aftertaste | 0 | 0 |
| Bitterness | 0 | -1 |
| Astringency | 0 | +1 |
| Off-flavor | 0 | 0 |

It can be seen that Comparative Example 7 has an overall flavor lighter than that of Example 7 but a stronger astringency.

### Example 8

Production of hot extracted black tea beverage, including:
S100: adding 40 g of CTC black tea leaves produced in Sri Lanka and 400 g of RO water (70°C) into a house-made 5 L extraction apparatus, such that the black tea leaves are soaked in the RO water for 2 minutes by leaving to stand without stirring for extraction, and after the extraction is completed, leaching a tea solution (an extract liquid 1) for later use;
S200: adding 400 g of RO water (70°C) to the extraction apparatus again to extract the remaining tea leaves in step S100 for 2 minutes, and after the extraction is completed, leaching the tea solution (an extract liquid 2) for later use;
S210: repeating step S200 once to obtain an extract liquid 3;
S300: combining the extract liquids 1 to 3 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage of 13.3 g/L (on the basis of dried tea leaves), sterilizing and then bottling same to obtain a bottled tea beverage.

### Comparative example 8

S 100': adding 40 g of CTC black tea leaves produced in Sri Lanka and of the same type and batch as those in example 8 and 1200 g of RO water (70°C) into a house-made 5 L extraction apparatus, such that the black tea leaves are soaked in the RO water for 6 minutes by leaving to stand without stirring for extraction, and after the extraction is completed, leaching a tea solution (an extract liquid 1') for later use;
S200': cooling the extract liquid 1' obtained in step S100', and purifying same in a centrifuge (5000 RPM, 10 minutes) to obtain a clearer tea extract liquid; and
S300': formulating the tea extract liquid obtained in step S200' into a beverage of 13.3 g/L (on the basis of dried tea leaves), sterilizing and then bottling same to obtain a bottled tea beverage.

### Test example 8

1. The solid content and extraction yield of the tea extract liquids prepared in Example 8 and Comparative Example 8 above are calculated. The test results are as shown in Table 8.1.
2. The taste sensory evaluations of aroma, flavor intensity, sweet aftertaste, bitterness and astringency of the bottled tea drinks prepared in the above Example 8 and Comparative Example 8 are carried out using a 5-scale evaluation method (-2 score to +2 score). The test results are as shown in Table 8.2 and Figure 8.

**Table 8.1**

| | Unit | Example 8 | Comparative example 8 |
|---|---|---|---|
| Black tea | g | 40 | 40 |
| RO water | | 400 g/extraction × 3 extractions = 1200 g | 1200 g |
| Extraction conditions | | RO water (70°C) for 2 minutes each extraction, 3 extractions in total | Extraction with RO water (70°C) for 6 minutes, 1 extraction in total |
| Weight of extract liquid | g | 1007.2 | 1029.4 |
| Concentration of extract liquid | Bx | 1.33 | 1.21 |
| Yield | % | 33.5% | 31.1% |
| Tea polyphenols | Mg/L | 558 | 515 |
| Caffeine | Mg/L | 124.9 | 116.9 |
| Amino acids | Mg/L | 171.3 | 161.9 |

Compared with Comparative Example 8, the extraction yield of the production method of Example 8 is increased by 7.7%.

**Table 8.2**

| Hot Extracted Black Tea Beverage | Example 8 (0 score as benchmark) | Comparative example 8 |
|---|---|---|
| Aroma intensity | 0 | 0 |
| Flavor Intensity | 0 | -1 |
| Sweet aftertaste | 0 | 0 |
| Bitterness | 0 | +1 |
| Astringency | 0 | +1 |
| Off-flavor | 0 | 0 |

It can be seen that Comparative Example 8 has an overall flavor lighter than that of Example 8 but stronger bitterness and astringency.

### Example 9

Production of hot extracted oolong tea beverage, including:
S100: adding 30 g of oolong tea leaves of tieguanyin produced in Anxi, Fujian, and 90 g of RO water (100°C) into a house-made 1 L extraction apparatus, such that the oolong tea leaves are soaked in the RO water for 5 minutes by leaving to stand without stirring for extraction, and after the extraction is completed, leaching a tea solution (an extract liquid 1) for later use;
S200: adding 90 g of RO water (100°C) to the extraction apparatus again to extract the remaining tea leaves in step S100 for 5 minutes, and after the extraction is completed, leaching the tea solution (an extract liquid 2) for later use;
S210: repeating step S200 5 times to obtain an extract liquids 3 to 7;
S300: combining the extract liquids 1 to 7 obtained in steps S100 to S210, and then cooling same and purifying same in a centrifuge (5000 RPM, 10 minutes) to obtain a clearer tea extract liquid; and
S400: formulating the tea extract liquid obtained in step S300 into a beverage of 14.5 g/L (on the basis of dried tea leaves), sterilizing and then bottling same to obtain a bottled tea beverage.

### Comparative example 9

S100': adding 30 g of oolong tea leaves of tieguanyin produced in Anxi, Fujian, and of the same type and batch as those in example 9 and 630 g of RO water (100°C) into a house-made 1 L extraction apparatus, such that the oolong tea leaves are soaked in the RO water for 35 minutes by leaving to stand without stirring for extraction, and after the extraction is completed, leaching a tea solution (an extract liquid 1') for later use;
S200': cooling the extract liquid 1' obtained in step S 100', and purifying same in a centrifuge (5000 RPM, 10 minutes) to obtain a clearer tea extract liquid;
S300': formulating the tea extract liquid obtained in step S200' into a beverage of 14.5 g/L (on the basis of dried tea leaves), sterilizing and then bottling same to obtain a bottled tea beverage.

### Test example 9

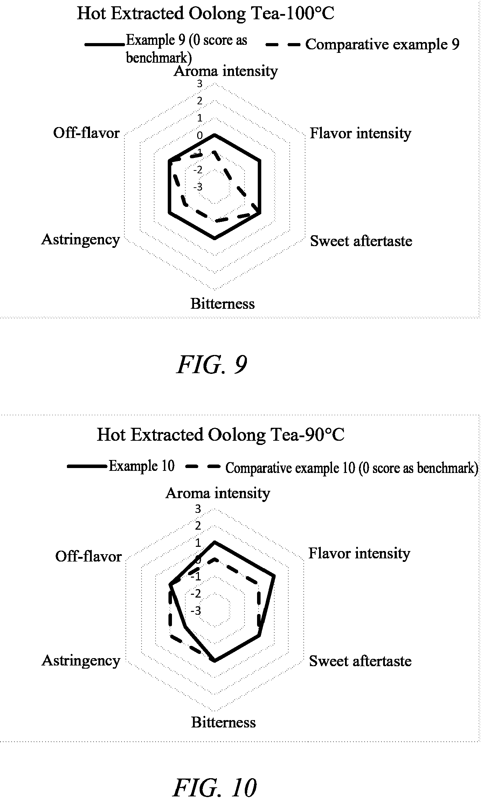

1. The solid content and extraction yield of the tea extract liquids prepared in Example 9 and Comparative Example 9 above are calculated. The test results are as shown in Table 9.1.
2. The taste sensory evaluations of aroma, flavor intensity, sweet aftertaste, bitterness and astringency of the bottled tea drinks prepared in the above Example 9 and Comparative Example 9 are carried out using a 5-scale evaluation method (-2 score to +2 score). The test results are as shown in Table 9.2 and Figure 9.

**Table 9.1**

| | Unit | Example 9 | Comparative example 9 |
|---|---|---|---|
| Oolong tea | g | 30 | 30 |
| RO water | | 90 g/extraction × 7 extractions = 630 g | 630 g |
| Extraction conditions | / | RO water (100°C) for 5 minutes each extraction, 7 extractions in total | Extraction with RO water (100°C) for 35 minutes, 1 extraction in total |
| Weight of extract liquid | g | 555.8 | 490 |
| Concentration of extract liquid | Bx | 1.15 | 0.89 |
| Yield | % | 21.3% | 14.5% |
| Tea polyphenols | Mg/L | 474 | 339 |
| Caffeine | Mg/L | 69.6 | 53.6 |
| Amino acids | Mg/L | 93.7 | 72.3 |

Compared with Comparative Example 9, the extraction yield of the production method of Example 9 is increased by 46.9%.

**Table 9.2**

| Hot Extracted Oolong Tea Beverage | Example 9 (0 score as benchmark) | Comparative example 9 |
|---|---|---|
| Aroma intensity | 0 | -1 |
| Flavor Intensity | 0 | -2 |
| Sweet aftertaste | 0 | 0 |
| Bitterness | 0 | -1 |
| Astringency | 0 | -1 |
| Off-flavor | 0 | 0 |

It can be seen that the overall flavor of the bottled tea beverage of Comparative Example 9 is lighter than that of Example 9.

### Example 10

Production of hot extracted oolong tea beverage, including:
S100: adding 62.5 g of oolong tea leaves of tieguanyin produced in Anxi, Fujian, and 1250 g of RO water (90°C) into a house-made 5 L extraction apparatus, such that the oolong tea leaves are soaked in the RO water for 8 minutes by leaving to stand without stirring for extraction, and after the extraction is completed, leaching a tea solution (an extract liquid 1) for later use;
S200: adding 1250 g of RO water (90°C) to the extraction apparatus again to extract the remaining tea leaves in step S100 for 8 minutes, and after the extraction is completed, leaching the tea solution (an extract liquid 2) for later use;
S300: combining the extract liquids 1 and 2 obtained in steps S100 and S200, and then cooling same and purifying same in a centrifuge (5000 RPM, 10 minutes) to obtain a clearer tea extract liquid; and
S400: formulating the tea extract liquid obtained in step S300 into a beverage of 12.5 g/L (on the basis of dried tea leaves), sterilizing and then bottling same to obtain a bottled tea beverage.

### Comparative example 10

S100': adding 62.5 g of oolong tea leaves produced in Anxi, Fujian, and of the same type and batch as those in example 10 and 2500 g of RO water (90°C) into a house-made 5 L extraction apparatus, such that the oolong tea leaves are soaked in the RO water for 16 minutes by leaving to stand without stirring for extraction, and after the extraction is completed, leaching a tea solution (an extract liquid 1') for later use;
S200': cooling the extract liquid 1' obtained in step S100', and purifying same in a centrifuge (5000 RPM, 10 minutes) to obtain a clearer tea extract liquid; and
S300': formulating the tea extract liquid obtained in step S200' into a beverage of 12.5 g/L (on the basis of dried tea leaves), sterilizing and then bottling same to obtain a bottled tea beverage.

### Test example 10

1. The solid content and extraction yield of the tea extract liquids prepared in Example 10 and Comparative Example 10 above are calculated. The test results are as shown in Table 10.1.
2. The taste sensory evaluations of aroma, flavor intensity, sweet aftertaste, bitterness and astringency of the bottled tea drinks prepared in the above Example 10 and Comparative Example 10 are carried out using a 5-scale evaluation method (-2 score to +2 score). The test results are as shown in Table 10.2 and Figure 10.

**Table 10.1**

| | Unit | Example 10 | Comparative example 10 |
|---|---|---|---|
| Oolong tea | g | 62.5 | 62.5 |
| RO water | | 1250 g/extraction × 2 extractions = 2500 g | 2500 g |
| Extraction conditions | / | RO water (90°C) for 8 minutes each extraction, 2 extractions in total | Extraction with RO water (90°C) for 16 minutes, 1 extraction in total |
| Weight of extract liquid | g | 2199 | 2219 |
| Concentration of extract liquid | Bx | 0.84 | 0.78 |
| Yield | % | 29.6% | 27.7% |
| Tea polyphenols | Mg/L | 705 | 650 |
| Caffeine | Mg/L | 96.2 | 90.4 |
| Amino acids | Mg/L | 87.3 | 82 |

Compared with Comparative Example 10, the extraction yield of the production method of Example 10 is increased by 6.9%.

**Table 10.2**

| Hot Extracted Oolong Tea Beverage | Example 10 | Comparative example 10 (0 score as benchmark) |
|---|---|---|
| Aroma intensity | +1 | 0 |
| Flavor Intensity | +1 | 0 |
| Sweet aftertaste | 0 | 0 |
| Bitterness | 0 | 0 |
| Astringency | -1 | 0 |
| Off-flavor | 0 | 0 |

It can be seen that Comparative Example 10 has an overall flavor lighter than that of Example 10 but a stronger astringency.

Herebelow, the influence of tea leaf-to-water ratio (that is, the mass ratio of tea leaves to deionized water used in a single extraction) and extraction time on the extraction yield is illustrated by way of examples. All experiments are carried out by water at room temperature, and the types and batches of tea leaves are the same in the same example, in order to reduce the influence of temperature fluctuations in extraction and tea leaf source on the experimental results. According to the dissolution dynamic model, other temperatures are also in line with the predicted results of this experiment.

### Example 11-1 (Influence of tea leaf-to-water ratio on extraction yield, tea leaf-to-water ratio in single extraction: 1:10)

Production of cold extracted oolong tea beverage, including:
S100: adding 43.5 g of oolong tea leaves of tieguanyin A produced in Anxi, Fujian, and 435 g of RO water (24. 5°C) into a house-made 1 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 435 g of RO water (24.5°C) to the extraction apparatus again to extract the remaining tea leaves in step S100 for 10 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: weighing the tea extract liquids prepared in steps S100 and S300 respectively, measuring the Brix, and calculating the extraction yield. The calculation results are as shown in Table 10.

### Example 11-2 (Influence of tea leaf-to-water ratio on extraction yield, tea leaf-to-water ratio in single extraction: 1: 12.5)

Production of cold extracted oolong tea beverage, including:
S100: adding 43.5 g of oolong tea leaves of tieguanyin A produced in Anxi, Fujian, and of the same batch as in Example 11-1 and 543.75 g of RO water (24.5°C) into a house-made 1 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 543.75 g of RO water (24.5°C) to the extraction apparatus again to extract the remaining tea leaves in step S100 for 10 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: weighing the tea extract liquids prepared in steps S100 and S300 respectively, measuring the Brix, and calculating the extraction yield. The calculation results are as shown in Table 10.

### Examples 11-3 (Influence of tea leaf-to-water ratio on extraction yield, tea leaf-to-water ratio in single extraction: 1:15)

Production of cold extracted oolong tea beverage, including:
S100: adding 43.5 g of oolong tea leaves of tieguanyin A produced in Anxi, Fuj ian, and of the same batch as in Example 11-1 and 652.5 g of RO water (24.5°C) into a house-made 1 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 652.5 g of RO water (24.5°C) to the extraction apparatus again to extract the remaining tea leaves in step S100 for 10 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: weighing the tea extract liquids prepared in steps S100 and S300 respectively, measuring the Brix, and calculating the extraction yield. The calculation results are as shown in Table 10.

**Table 11**

| tea leaf-to-water ratio (1 : X) | Extraction yield (%) (1 time) | Extraction yield (%) (4 times) |
|---|---|---|
| 1: 10.0 | 11.45% | 26.36% |
| 1: 12.5 | 11.20% | 26.11% |
| 1: 15.0 | 10.36% | 25.98% |

It can be seen that when the tea leaf-to-water ratio in a single extraction is in a range of 1 : 10.0 to 1 : 15.0, the tea leaf-to-water ratio has little influence on the extraction yield. In addition, the extraction results from different tea leaf-to-water ratios show that a higher the tea leaf-to-water ratio required for a single extraction is not always better.

### Example 12 (Influence of extraction time on extraction yield in a single extraction, using a single extraction and a tea leaf-to-water ratio of 1 : 30, and turning on magnetic stirring during extraction)

Production of cold extracted oolong tea beverage, including:
S1: adding 22.8 g of crushed frozen top oolong tea leaves produced in Taiwan and 684 g of RO water (25°C) into a house-made 1 L extraction apparatus, such that the oolong tea leaves are soaked for 10 minutes in the RO water under magnetic stirring at a rotation speed of 100 RPM for extraction; after extraction is completed, leaching a tea solution (an extract liquid 1) for later use;
S2: adding 22.8 g of crushed frozen top oolong tea leaves produced in Taiwan and of the same batch as that in step S1 and 684 g of RO water (25°C) into a house-made 1 L extraction apparatus, such that the oolong tea leaves are soaked for 20 minutes in the RO water under magnetic stirring at a rotation speed of 100 RPM for extraction; after extraction is completed, leaching a tea solution (an extract liquid 2) for later use;
S3: adding 22.8 g of crushed frozen top oolong tea leaves produced in Taiwan and of the same batch as that in step S1 and 684 g of RO water (25°C) into a house-made 1 L extraction apparatus, such that the oolong tea leaves are soaked for 30 minutes in the RO water under magnetic stirring at a rotation speed of 100RPM for extraction; after extraction is completed, leaching a tea solution (an extract liquid 3) for later use; and
S4: weighing the tea extract solutions prepared in steps S1 to S3 respectively, measuring the Brix, and calculating the extraction yield. The calculation results are shown in Table 12.

**Table 12**

| Sample | Tea leaves (gram) | Tea extraction time (minute) | Extract liquid (g) | Brix | Extraction yield (%) |
|---|---|---|---|---|---|
| S1 | 22.8 | 10 | 621.7 | 1.14 | 31.09 |
| S2 | 22.8 | 20 | 591.8 | 1.22 | 31.67 |
| S3 | 22.8 | 30 | 587.3 | 1.22 | 31.43 |

It can be seen that a longer single extraction time is not always better. After a certain level of extraction is reached, a further extended time will not help the increase of the extraction yield much.

### Example 13-1 (Influence of extraction time on the extraction yield, using multiple extractions; the tea leaf-to-water ratio in a single extraction of 1 : 10)

Production of cold extracted oolong tea beverage, including:
S 100: adding 43.5 g of oolong tea leaves of tieguanyin B produced in Anxi, Fujian, and 435 g of RO water (24.3°C) into a house-made 1 L extraction apparatus, such that the oolong tea leaves are soaked in the RO water for 8 minutes by leaving to stand without stirring for extraction, and after the extraction is completed, leaching a tea solution (an extract liquid 1) for later use;
S200: adding 435 g of RO water (24.3°C) to the extraction apparatus again to extract the remaining tea leaves in step S100 for 8 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: weighing the extract liquids prepared in steps S100 to S300 respectively, measuring the Brix, and calculating the extraction yield. The calculation results are as shown in Table 12.

### Example 13-2 (Influence of extraction time on the extraction yield, using multiple extractions; the tea leaf-to-water ratio in a single extraction of 1 : 10)

Production of cold extracted oolong tea beverage, including:
S 100: adding 43.5 g of oolong tea leaves of tieguanyin B produced in Anxi, Fujian, and 435 g of RO water (24.3°C) into a house-made 1 L extraction apparatus, such that the oolong tea leaves are soaked in the RO water for 10 minutes by leaving to stand without stirring for extraction, and after the extraction is completed, leaching a tea solution (an extract liquid 1) for later use;
S200: adding 435 g of RO water (24.3°C) to the extraction apparatus again to extract the remaining tea leaves in step S100 for 10 minutes, and after the extraction is completed, leaching the tea solution (an extract liquid 2) for later use;
S210: repeating step S200 twice to obtain an extract liquid 3 and an extract liquid 4;
S300: combining the extract liquids 1 to 4 obtained in steps S100 to S210, and then cooling same and purifying same in a centrifuge (5000 RPM, 10 minutes) to obtain a clearer tea extract liquid; and
S400: weighing the tea extract solutions prepared in steps S100 to S300 respectively, measuring the Brix, and calculating the extraction yield. The calculation results are as shown in Table 13.

**Table 13**

| Sample | Extraction yield (%), relative to dry tea leaves | |
|---|---|---|
| | Single extraction time of 8 minutes | Single extraction time of 10 minutes |
| Extraction yield of | 10.08 | 10.44 |
| extract liquid 1, % | | |
| Extraction yield of extract liquid 2, % | 6.21 | 7.38 |
| Extraction yield of extract liquid 3, % | 4.22 | 4.17 |
| Extraction yield of extract liquid 4, % | 3.35 | 2.62 |
| Total extraction yield, % | 23.86 | 24.61 |

It can be seen that when the parameters such as the number of extractions and the tea leaf-to-water ratio are the same, there is little difference in the total extraction yield between a single extraction time of 8 minutes and 10 minutes. In this case, in view of the production efficiency, a shorter time can be used to achieve the desired extraction yield.

Example 14 (Influence of extraction time on extraction yield in a single extraction, using a single extraction and the tea leaf-to-water ratio of 1 : 10, 1 : 20 and 1 : 40, respectively) By means of static extraction (i.e., soaking the tea leaves in water by leaving to stand without stirring); a sample is collected after slight stirring until uniform.

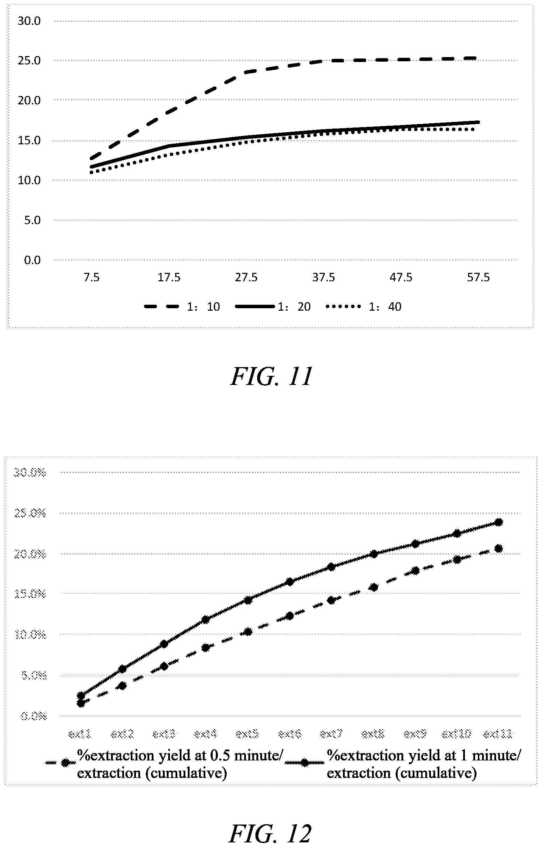

Production of cold extracted oolong tea beverage, including:
S1(1: 10): adding 87 g of crushed frozen top oolong tea leaves produced in Taiwan and 870 g of RO water (24.5°C) into a house-made 5 L extraction apparatus, such that the oolong tea leaves are soaked for extraction, and collecting samples (5 ml) at intervals of 7.5 minutes respectively, with a number of continuous sampling of 6 (by slight stirring to ensure that the extract liquid is uniform during the sampling) for later use;
S2(1: 20): adding 87 g of crushed frozen top oolong tea leaves produced in Taiwan and 1740 g of RO water (24.5°C) into a house-made 5 L extraction apparatus, such that the oolong tea leaves are soaked for extraction, and collecting samples (5 ml) at intervals of 7.5 minutes respectively, with a number of continuous sampling of 6 (by slight stirring to ensure that the extract liquid is uniform during the sampling) for later use;
S3(1: 40): adding 87 g of crushed frozen top oolong tea leaves produced in Taiwan and 3480 g of RO water (24.5°C) into a house-made 5 L extraction apparatus, such that the oolong tea leaves are soaked for extraction, and collecting samples (5 ml) at intervals of 7.5 minutes respectively, with a number of continuous sampling of 6 (by slight stirring to ensure that the extract liquid is uniform during the sampling) for later use; and
S4: weighing the 6 samples collected in steps S1 to S3 respectively, measuring the Brix, and calculating the extraction yield. (note: since each sample is of a volume of 5 ml, the volume is small, and the influence on the total volume of the extract liquid is ignored.) The calculation results are as shown in Table 14 and Figure 11.

**Table 14**

| Time (min) | Extraction yield (cumulative) (%) | | |
|---|---|---|---|
| | 1 : 10 | 1 : 20 | 1 : 40 |
| 7.5 | 12.8 | 11.7 | 11.0 |
| 15 | 18.6 | 14.3 | 13.2 |
| 22.5 | 23.6 | 15.4 | 14.8 |
| 30 | 25.0 | 16.2 | 15.8 |
| 37.5 | 25.1 | 16.7 | 16.4 |
| 45 | 25.3 | 17.3 | 16.4 |

It can be seen that a longer single extraction time is not always better at different tea leaf-to-water ratios. After a certain extraction time (30 minutes) is reached, a further extended time will not help the increase of the extraction yield much. Also, it can be seen that the increase of water for extraction does not improve the extraction yield in the same period of time; on the contrary, the extraction yield tends to decrease.

### Example 15 (Influence of the extraction times of 0.5 minute and 1 minute in a single extraction on the overall extraction yield, using a single extraction and the leaves-to-water ratio of 1 : 11; a standard evaluation cup, and a static extraction method)

Production of hot extracted oolong tea beverage, including:
S1(1: 11): adding 10 g of frozen top oolong tea leaves produced in Taiwan and 110 g of RO water (100°C) into the standard evaluation cup, such that the oolong tea leaves are soaked for extraction for 0.5 minutes and leaching the tea solution; then adding 110 g of RO water (100°C) into the standard evaluation cup (remaining tea leaves) where the tea solution is leached and repeating this process 10 times; and leaching the tea solution respectively for later use;
S2(1: 11): adding 10 g of frozen top oolong tea leaves produced in Taiwan and 110 g of RO water (100°C) into the standard evaluation cup, such that the oolong tea leaves are soaked for extraction for 1 minutes and leaching the tea solution; then adding 110 g of RO water (100°C) into the standard evaluation cup (remaining tea leaves) where the tea solution is leached and repeating this process 10 times; and leaching the tea solution respectively for later use; and
S3: weighing the 11 samples collected in S1 and S2 respectively, measuring the Brix and calculating the extraction yield. The calculation results are as shown in Table 15 and Figure 12.

**Table 15**

| Tea solution samples/number of extractions | Extraction yield (cumulative) % | |
|---|---|---|
| | 0.5 minutes/extraction (extraction time) | 1 minute/extraction (extraction time) |
| ext1 | 1.6% | 2.5% |
| ext2 | 3.7% | 5.8% |
| ext3 | 6.1% | 8.9% |
| ext4 | 8.4% | 11.9% |
| ext5 | 10.4% | 14.3% |
| ext6 | 12.4% | 16.5% |
| ext7 | 14.3% | 18.4% |
| ext8 | 15.9% | 19.9% |
| ext9 | 18.0% | 21.2% |
| ext10 | 19.3% | 22.5% |
| ext11 | 20.7% | 23.8% |

The experimental results show that multiple short-term extractions can significantly increase the extraction yield. For the comparison of a single extraction of 0.5 minute and 1 minute, when the total extractions is repeated 11, the difference in extraction yield is 3.1%, but the total extraction time is doubled. In comparison, the difference in total extraction time is more obvious.

The disclosure is an example of the principles of the embodiments in the present application, and does not limit the present application in any form or in substance, or limit the present application to specific embodiments. For those skilled in the art, it is obvious that the elements, methods, systems, etc. of the technical solutions in the embodiments of the present application can be altered, changed, modified, and evolved without departing from the principles, spirit and scope as defined in the claims, as described in the above embodiments and technical solutions of the present application. The embodiments of these alterations, changes, modifications, and evolutions are all included in the equivalent embodiments of the present application, and these equivalent embodiments are all included in the scope of the present application as defined by the claims. While the embodiments of the present application can be embodied in many different forms, described in detail herein are some embodiments of the present application. In addition, the embodiments of the present application include any possible combination of some or all of the various embodiments described herein, which are also included in the scope of the present application defined by the claims. All patents, patent applications, and other cited materials mentioned anywhere in the present application or in any one of the cited patents, cited patent applications, or other cited materials are hereby incorporated by reference in their entirety.

The above disclosure is intended to be illustrative and not exhaustive. This description will suggest many variations and optional solutions to those skilled in the art. All such optional solutions and variations are intended to be included within the scope of the claims, where the term "comprise/include" means "comprise/include, but not limited to".

The description of optional embodiments of the present application is completed herein. Those skilled in the art may recognize other equivalent transformations to the embodiments described herein, which equivalent transformations are also encompassed by the claims attached hereto.

## Claims

1. A method for producing an extract liquid, comprising:
S100: extracting a material to be extracted with deionized water, and removing an extract solution after the extraction is completed;
S200: adding deionized water again to extract the extraction residue obtained by removing the extract solution, and removing the extract solution after the extraction is completed;
S210: optionally, repeating step S200 for extraction; and
S300: mixing the extract solution obtained in steps S100, S200 and optionally step S210 together to obtain the extract liquid.

2. The production method according to claim 1, wherein the material to be extracted is coffee, tea leaves, and roots, stems, leaves, flowers, fruits or seeds of herbaceous plants.

3. The production method according to claim 2, wherein the material to be extracted is tea leaves.

4. The production method according to claim 3, wherein the deionized water in each step is at a temperature of from 5°C to 100°C, optionally, a temperature of from 5°C to 35°C or 35°C to 100°C.

5. The production method according to claim 3, wherein in each step, a mass ratio of the tea leaves to the deionized water used for extraction is in a range of 1 : 3 to 1 : 20; optionally, the mass ratio of the tea leaves to the deionized water used for extraction in each step is in a range of 1 : 5 to 1 : 15; and also optionally, the mass ratio of the tea leaves to the deionized water used for extraction in each step is in a range of 1 : 8 to 1 : 12.

6. The production method according to claim 5, wherein in each step, the extraction is carried out for a time of 0.5 minutes to 30 minutes; optionally, the extraction time in each step is 1.5 minutes to 20 minutes; and also optionally, the extraction time in each step is 1.5 minutes to 12 minutes.

7. The production method according to any one of claims 1 to 6, wherein a number of the repeating step S200 in step S210 is 0 to 8, optionally, the number of the repeating step S200 in step S210 is 0 to 6.

8. The production method according to any one of claims 1 to 6, wherein the temperature of the deionized water used for extraction in each step is the same or different, and optionally, the temperature of the deionized water used for extraction in each step is the same;
or, during the whole extraction process, both deionized water at 5°C to 35°C and deionized water at 35°C to 100°C are used.

9. The production method according to any one of claims 1 to 6, wherein the amount of deionized water used for extraction in each step is the same or different, and optionally, the amount of deionized water used for extraction in each step is the same; and
optionally, the deionized water is anion-cation resin exchanged deionized water, distilled water or RO water.

10. The production method according to any one of claims 1 to 6, wherein in step S100, the material to be extracted is added before or after the deionized water used for extraction is added.

11. The production method according to any one of claims 1 to 6, wherein the extraction is carried out with or without stirring.

12. The production method according to any one of claims 1 to 6, wherein the extraction is carried out by a tank, basket or drip extraction apparatus.

13. The production method according to any one of claims 3 to 6, wherein the tea leaves are selected from any one or more of black tea, green tea, dark tea, oolong tea, yellow tea, white tea and scented tea leaves.

14. An extract liquid prepared by the production method according to any one of claims 1 to 13.

15. A container-packed beverage obtained directly or by dilution of the extract liquid according to claim 14.
